# EUROPEAN PATENT SPECIFICATION

(11) **EP 1 036 049 B1**
(45) Date of publication and mention of the grant of the patent: **11.12.2002**
(21) Application number: 98916980.0
(22) Date of filing: 17.03.1998
(51) Int. Cl.: C04B 41/64

(54) **Process for the treatment of water-saturated fibre-reinforced sheets.**
Verfahren zur Behandlung von faserverstärkten durchtränkten Zementplatten
PROCEDE POUR LE TRAITMENT DE PLAQUES RENFORCEES PAR DES FIBRES ET SATUREES EN EAU

(30) Priority: 02.12.1997 IT MI972666
(43) Date of publication of application: 20.09.2000
(73) Proprietor: Maranit S.p.a., 44028 Poggio Renatico (IT)
(72) Inventor: GUIDETTI, Antonio, I-44028 Poggio Renatico (IT)
(74) Representative: Minoja, Fabrizio, Dr.
(86) International application number: EP9801544
(87) International publication number: WO99028275

(56) References cited:
- WO-A-84/04765
- US-A- 3 589 917
- CHEMICAL ABSTRACTS, vol. 116, no. 10, 9 March 1992 Columbus, Ohio, US; abstract no. 90075u, XP000316822 & JP 03 223 189 A (MATSUSHITA ELECTRIC WORKS LTD; TOSHIBA SILICONE CO LTD ) 2 October 1991
- PATENT ABSTRACTS OF JAPAN vol. 014, no. 080 (C-0689), 15 February 1990 & JP 01 298086 A (MATSUSHITA ELECTRIC WORKS LTD), 1 December 1989, -& DATABASE WPI Derwent Publications Ltd., London, GB; AN 90-018635 XP002072455
- PATENT ABSTRACTS OF JAPAN vol. 097, no. 010, 31 October 1997 & JP 09 142962 A (ASAHI CHEM IND CO LTD), 3 June 1997,

## Description

The present invention relates to a process for the manufacture of corrugated sheets in which fibres of cellulose, polyacrylonitrile, polypropylene, carbon or of another organic and inorganic kind are dispersed in a cement matrix. These flat or corrugated sheets, straight or curved, may be additionally reinforced with wires, strips or bands inserted longitudinally in the fibre-reinforced cement matrix. They are used for covering roofs, for false ceilings or for lining external and internal walls of buildings. At present various known production techniques exist such as the Hatschek, Magnani, Mazza or Netcem with Retiflex process [R.N. Swamy, "Natural Fiber Reinforced Cement and Concrete", Blackie Academic and Professional, UK (1989); R.N. Swamy and B. Barr, "Fiber Reinforced Cements and Concretes: Recent Developments", E and FN Spon, UK (1989)].

The steps in a process commonly used for the production of fibre-reinforced sheets is described below:
a) Mixing and dispersion of the raw materials (cement, pozzolanic materials and fibres) in water so as to obtain a dense slush (1200 g/l) to which water is added so as to obtain a diluted aqueous suspension (1010 - 1020 g/l);
b) Picking up the aqueous suspension on a felt belt (in a closed cycle for removal of most of the water, known as "dewatering") and formation of a green sheet of fibre-reinforced cement paste which is then pressed by means of the contrast between the main roll and the forming roll of the sheet machine until the green sheet of a thickness about 6-7 mm with a residual moisture of about 30% is obtained;
c) Cutting of the green flat sheet to the desired commercial dimensions, corrugation thereof so as to obtain a corrugated sheet and deposition of the green sheet between metal moulds treated beforehand with detaching oil;
d) Heat treatment at 40-60°C (for 10-12 hours) of a pile of sheets arranged between metal moulds so as to favour hardening of the material;
e) Treatment of the hardened corrugated sheets and start of final seasoning (at room temperature or in an autoclave at about 160°C) in order to achieve the required strength values.

On the basis of the strength values achieved at the end of the process - and in particular the flexural up rupture load - the corrugated sheets may be classified with regard to their compliance with standards and commercial characteristics. Table 1, for example, shows the different types of sheets classified (in accordance with the European standard EN 494) by category (in relation to the height of the corrugation) and by class (on the basis of the flexural load up rupture, expressed as N per metre of width, applied to a span of 1.1 m). The limit values of the flexural load up rupture shown in Table 1 refer to sheets immersed in water for 24 hours prior to performing the flexural loading test. For example, the sheets of category C (those with a corrugation height of between 40 and 30 mm) belong to Class 1 or Class 2 depending on whether the breaking load exceeds 4250 or 3500 N/m respectively, while they are considered as not complying with the standard if the breaking load is less than 3500 N/m.

**Table 1 -**

| **Category and class of fibre-reinforced sheets in accordance with the European standard EN 494** | | | |
|---|---|---|---|
| **Category** | **Height of corrugation (mm)** | **Minimum breaking load per metre of width and span of 1.1 m** | |
| | | **Class 1** | **Class 2** |
| A | from 15 to 30 | 1400 N/m | 1250 N/m |
| B | from 25 to 45 | 2500 N/m | 2000 N/m |
| C | from 40 to 80 | 4250 N/m | 3500 N/m |
| D | from 60 to 120 | 7000 N/m | 5500 N/m |
| E | from 90 to 150 | 12500 N/m | 8500 N/m |

A second requirement, which is just as important as the strength, relates to the performance of the sheet in response to thermo-hygrometric variations during use. For this purpose, the same European standard EN 494 stipulates verification of the state of the sheets - which must be integral and without cracks or other defects - at the end of 50 thermo-hygrometric cycles (heat-rain tests). Each cycle, lasting 6 hours, comprises:
- exposure to the rain, in the form of atomized water, at room temperature, for a duration of 2 h 50 min.;
- a pause of 10 min.;
- a heat treatment (for 2 h 50 min.) which simulates exposure to the sun, in the form of heating with lamps so as to maintain the temperature at 70°C;
- a pause of 10 min.

On account of these thermo-hygrometric variations, the sheets undergo flexural deformations (deflection) in the middle which, in some cases, results in failure, in particular if the sheets are subjected to the heat-rain tests in the maximum commercial dimensions in which they are produced and distributed (e.g. 3050 x 1100 mm) without being first reduced to smaller-size test pieces.

It exists a relationship of an inversely proportional nature between strength on the one hand and performance in response to the thermo-hygrometric variations on the other hand. In fact, the greater the strength, the poorer is the performance of the sheet during the heat-rain test. This undesirable relationship (in that it prevents the production of sheets which not only have good mechanical properties, but are also durable when exposed to environmental conditions during use) is probably due to the excessive rigidity which usually accompanies the high strength of the cement materials and which is responsible for cracking of the sheets following excessive flexural deformation in the heat-rain test.

In practice, if the strength is increased in order to increase the resistance class (from C2 to C1 in Table 1) the performance in the heat-rain test worsens (resulting in a reduction in the number of thermo-hygrometric cycles which the sheet is able to withstand before cracking following flexural deformations).

It has now been surprisingly discovered that the process described below allows the thermo-hygrometric resistance of the fibre-reinforced cement sheets to be improved without adversely affecting the strength.

The process according to the invention consists in subjecting green sheets of fibre-reinforced cement paste still saturated with water and recently deposited on the metal moulds to a surface treatment with a silane solution.

The silane according to the invention has the following general formula (I):

R-Si(OR')₃ (I)

where
R is an alkyl group CₙH₂ₙ₊₁ with n = integer comprised between 1 and 10;
R' is CₘH₂ₘ₊₁ with m = 1, 2, 3; may be dissolved in organic solvent, for example propyl alcohol or acetone, in water or in mixtures of the two, even though water is preferred since it reduces the presence of organic vapours on the application site.

The silane is preferably used in quantities greater than 1 g per m² of sheet, even more preferably in quantities of 5 g/m².

With greater quantities no further advantages in the performance during the heat-rain test are observed. The fibre-reinforced sheets which can be treated with the process according to the invention are those produced using the Hatschek, Magnani, Mazza, Netcem or Retiflex techniques or other technology involving seasoning at room temperature or higher temperatures.

The silane solution may be applied by brush, roller or spray onto the newly formed green sheet which is saturated with water and not yet hardened.

After application of the silane, the green sheet is subjected to hardening. Following this treatment, the durability of the hardened sheets is significantly improved (in terms of better performance in response to thermo-hygrometric variations) without any negative consequences on the strength.

The particularly surprising aspect of the invention consists in the fact that usually the hydrophobic products are applied onto dry substrates (bricks, stones, mortars) so as to allow entry of these products, by means of absorption, into the empty pores of the substrates themselves. The advantage of being able to carry hydrophobic treatment on the materials still saturated with water is obvious and evident.

### Brief description of the figures

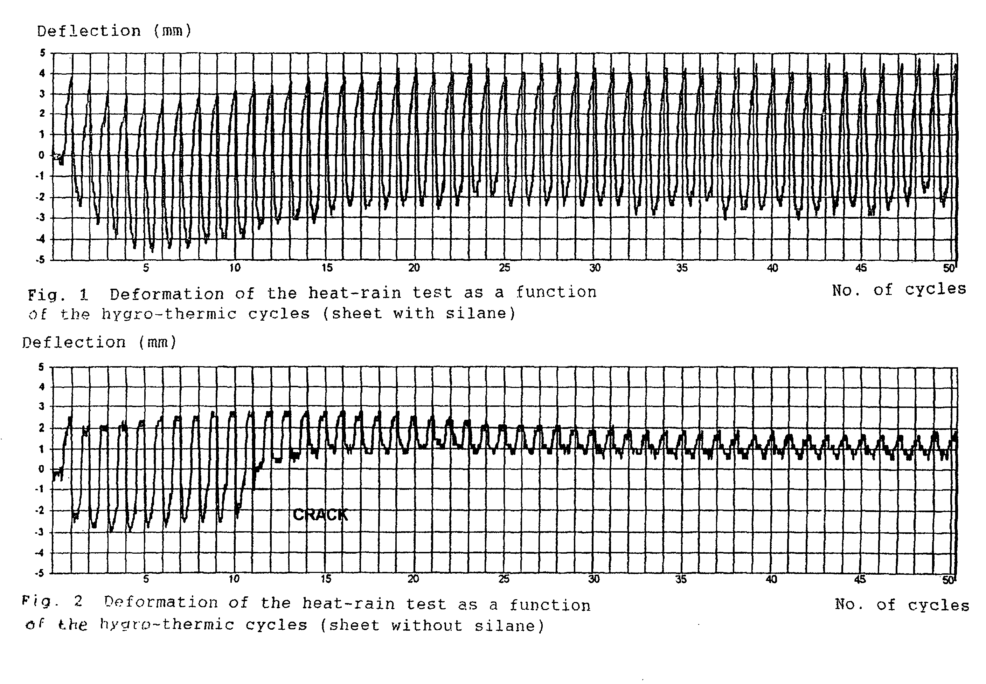

Two typical reactions of a sheet with silane (Fig. 1) and without silane (Fig. 2) are illustrated below.

**Figure 1:** Deformation in the heat-rain test as a function of the hygro-thermic cycles (sheet with silane). The absence of cracking is noted.

**Figure 2:** Deformation in the heat-rain test as a function of the hygro-thermic cycles (sheet without silane). It is noted that, after the eleventh cycle, the sheet cracks and the flexural deformations are reduced significantly.

The example shown below shows a comparison between mechanical strength and resistance to the heat-rain test of sheets produced with a known process and with the process according to the invention.

### Example

Sheets characterized by the following compositional and process parameters were produced on a plant based on the Hatschek process:
- pozzolan cement type CE IV/A R = 73%
- silica fumes = 15%
- long-fibre cellulose fibres (pine sulphate) = 3%
- short-fibre cellulose fibres
   (Eucalyptus sulphate) = 9%

The above-mentioned mixture was dispersed in water so as to obtain a dense slush (1200 g/l) and then transformed into a diluted suspension (1015 g/l) by means of further addition of water.

Simple layers were picked up by means of filtration onto a belt and pressed (60 kg/cm) until flat green sheets with thickness of 6.5 mm and with a water content of 30% were obtained. The corrugated green sheets deposited on metal moulds were thermally treated at 60°C (for 12 hours) inside a tunnel heated with hot air until hardened corrugated sheets were obtained.

The hardened sheets (thickness 6.5 mm, width 1100 mm, length 2440 mm, 60 mm corrugation height) were subjected to a steam curing in an autoclave (160°C) for 10 hours and then cooled at room temperature.

At the end of the autoclave process, 10 of these sheets were subjected to the mechanical strength test (flexural load as indicated in Table 1) and another 10 were subjected to the heat-rain test described above.

The results of the strength and heat-rain tests (in accordance with the European standard EN 494) are shown in Table 2.

**Table 2 -**

| **Strength (flexural load) and heat-rain test cycles of sheets produced as in the Example (without silane)** | | | |
|---|---|---|---|
| **SHEET** | **FLEXURAL LOAD (N/m)** | **SHEET** | **Heat-rain test cycles** |
| 1 | 4600 | 11 | 11 |
| 2 | 5100 | 12 | 10 |
| 3 | 5400 | 13 | 8 |
| 4 | 5200 | 14 | 9 |
| 5 | 4800 | 15 | 11 |
| 6 | 5200 | 16 | 9 |
| 7 | 5100 | 17 | 9 |
| 8 | 5600 | 18 | 4 |
| 9 | 4300 | 19 | 12 |
| 10 | 4900 | 20 | 11 |
| Average | 5020 | Average | 9.4 |

The data in Table shows that the sheets produced satisfy the strength requirements for Class 1 (>4250 N/m) in the Category C (corrugation height from 40 to 80 mm), but are too brittle and therefore unable to pass the heat-rain test (number of cycles = 9.4 < 50). The average value of the flexural load is 5020 N/m, while the average value of the cycles in the heat-rain test is 9.4.

The same types of sheets (in terms of composition and process parameters) described in the Example were produced, with the sole difference that various solutions of silane were applied (in an amount varying between 1 and 20 g of active product per m² of surface area) onto the green sheet soon after undergoing corrugation. Silanes having the formula (I) were used:

R-Si(OR')₃ (I)

where
compound a: R' = CH₃, R = C₃H₇
compound b: R' = CH₃, R = C₄H₉
compound c: R' = CH₃, R = C₈H₁₇
compound d: R' = C₂H₅, R = C₃H₇

The compounds a-d were dissolved in water, isopropyl alcohol and acetone at a concentration of 10%.

Table 3 shows the average strength and heat-rain test cycle values for the various types of silane and for the various concentrations of the solutions. Compared to the untreated sheets, those treated with silane do not have strength values which are significantly different. However, it can be noted that an active silane content greater than 1 g/m² is already sufficient to improve the performance in the heat-rain test (number of cycles) compared to the untreated sheets (36.8 against 9.4). However, the best results are achieved with a quantity of silane of at least 5 g per m² of sheet. With greater quantities of silane, no further advantages in the performance during the heat-rain test are noted.

**Table 3 -**

| **Strength (flexural load) and performance in the heat-rain test of sheets treated with silane** | | | | |
|---|---|---|---|---|
| **Silane with:** | **Silane/ surface area (g/m**^{**2**}**)** | **Solvent** | **Flexural load (N/m)** | **No. of heat-rain cycles** |
| R'= CH₃; R = C₃H₇ | 1 | Water | 4950 | 36.8 |
| R'= CH₃; R = C₃H₇ | 5 | Water | 5050 | > 200 |
| R'= CH₃; R = C₃H₇ | 20 | Water | 4970 | > 200 |
| R'= CH₃ R = C₄H₉ | 5 | Water | 5030 | > 200 |
| R'= CH₃ R= C₈H₁₇ | 5 | Propyl Alcohol | 4980 | > 200 |
| R'=C₂H₅ ; R = C₃H₇ | 5 | Acetone | 5010 | > 200 |

## Claims

1. Process for the treatment of fibre-reinforced cement sheets, **characterized in that** an organic or aqueous solution of silane having the general formula (I):
R-Si(OR')₃ (I)
where R is an alkyl group CₙH₂ₙ₊₁ with n = integer comprised between (or equal to) 1 and 10, and R' is CₘH₂ₘ₊₁ with m = 1, 2, 3, is applied to the green sheets of fibre-reinforced cement paste saturated with water.

2. Process according to Claim 1, **characterized in that** the solvents used for dissolving the silane are chosen from the group comprising water, propyl alcohol, acetone and mixtures thereof.

3. Process according to Claims 1-2, **characterized in that** the silane is used in quantities greater than 1 g per m² of sheet.

4. Process according to Claim 3, **characterized in that** said quantity is 5 g/m².

5. Process according to Claims 1-4, **characterized in that** the silane solution is applied by brush, roller or spray onto the green sheet saturated with water.

6. Process according to Claims 1-5, **characterized in that** compounds having the formula (I) are chosen from the group comprising:
i R' = CH₃, R = C₃H₇
ii R' = CH₃, R = C₄H₉
iii R' = = CH₃, R = C₈H₁₇
iv R' = C₂H₅, R = C₃H₇

7. Use of a solution of silane having the formula (i) for the treatment of fibre-reinforced cement sheets.

## Patentansprüche

1. Verfahren zur Behandlung von faserverstärkten Zementfolien, dadurch charakterisiert, dass eine organische oder wässrige Lösung eines Silans mit der allgemeinen Formel (I):
**R-Si(OR')**_{**3**} **(I)**
wobei R eine Alkylgruppe CₙH₂ₙ₊₁ ist, wobei r eine ganze Zahl zwischen (oder gleich) 1 und 10 ist, und R' CₘH₂ₘ₊₁ ist, wobei m = 1, 2, 3 ist, auf die mit Wasser gesättigten Rohfolien aus faserverstärktern Zementleim aufgetragen wird.

2. Verfahren nach Anspruch 1, **dadurch charakterisiert, dass** die zum Lösen des Silans verwendeten Lösungsmittel aus der Wasser, Propylalkohol, Aceton und Mischungen davon umfassenden Gruppe ausgewählt werden.

3. Verfahren nach den Ansprüchen 1 bis 2, **dadurch charakterisiert, dass** das Silan in Mengen von mehr als 1 g pro m² Folie verwendet wird.

4. Verfahren nach Anspruch 3, **dadurch charakterisiert, dass** diese Menge 5 g/m² beträgt.

5. Verfahren nach den Ansprüchen 1 bis 4, **dadurch charakterisiert, dass** die Lösung durch Bürsten, Walzen oder Sprühen auf die mit Wasser gesättigte Rohfolie aufgetragen wird.

6. Verfahren nach den Ansprüchen 1 bis 5, **dadurch charakterisiert, dass** die Verbindungen mit der Formel (l) aus der Gruppe ausgewählt werden, welche umfasst:
i R' = CH₃, R = C₃H₇
ii R' = CH₃, R = C₄H₉
iii R' = CH₃, R = C₈H₁₇
iv R' = C₂H₅, R = C₃H₇.

7. Verwendung einer Lösung eines Silans mit der Formel (i) zur Behandlung von faserverstärkten Zementfolien.

## Revendications

1. Procédé pour le traitement de feuilles de ciment renforcé par des fibres, **caractérisé en ce qu'**une solution organique ou aqueuse de silane de formule générale (I) :
R-Si(OR')₃ (I)
dans laquelle R est un groupe alkyle CₙH₂ₙ₊₁ où n est un entier de 1 à 10, bornes comprises, et R' est CₘH₂ₘ₊₁ où m vaut 1, 2 ou 3, est appliquée sur les feuilles crues de pâte de ciment renforcé par des fibres saturées d'eau.

2. Procédé selon la revendication 1, **caractérisé en ce que** les solvants utilisés pour dissoudre le silane sont choisis dans l'ensemble constitué par l'eau, l'alcool propylique, l'acétone et leurs mélanges.

3. Procédé selon les revendications 1 et 2, **caractérisé en ce que** le silane est utilisé en des quantités supérieures à 1 g par m² de feuille.

4. Procédé selon la revendication 3, **caractérisé en ce que** ladite quantité est de 5 g/m².

5. Procédé selon les revendications 1 à 4, **caractérisé en ce que** la solution de silane est appliquée au moyen d'une brosse, d'un rouleau ou d'une pulvérisation sur la feuille crue saturée d'eau.

6. Procédé selon les revendications 1 à 5, **caractérisé en ce que** les composés de formule (I) sont choisis dans l'ensemble comprenant :
i R' = CH₃, R = C₃H₇
ii R' = CH₃, R = C₄H₉
iii R' = CH₃, R = C₈H₁₇
iv R' = C₂H₅, R = C₃H₇

7. Utilisation d'une solution de silane de formule (i) pour le traitement de feuilles de ciment renforcé par des fibres.
